# EUROPÄISCHE PATENTSCHRIFT

(11) **EP 3 494 188 B1**
(45) Veröffentlichungstag und Bekanntmachung des Hinweises auf die Patenterteilung: **06.11.2019**
(21) Anmeldenummer: 16747772.8
(22) Anmeldetag: 03.08.2016
(51) Int. Cl.: C09D 183/04

(54) **VERNETZBARE BESCHICHTUNGSMASSEN AUF BASIS VON ORGANYLOXYSILANTERMINIERTEN POLYMEREN**
CROSS-LINKABLE COATING MATERIALS BASED ON ORGANYL OXYSILANE-TERMINATED POLYMERS
MATIÈRES DE REVÊTEMENT RÉTICULABLES À BASE DE POLYMÈRES À TERMINAISON ORGANYLOXYSILANE

(43) Veröffentlichungstag der Anmeldung: 12.06.2019
(73) Patentinhaber: Wacker Chemie AG, 81737 München (DE)
(72) Erfinder: STANJEK, Volker, 84539 Ampfing (DE); ANDERS, Udo, 84427 Sankt Wolfgang (DE); REITMAJER, Kurt, 84375 Kirchdorf (DE); ZANDER, Lars, 84503 Altötting (DE)
(74) Vertreter: Budczinski, Angelika
(86) Internationale Anmeldenummer: PCT/EP2016/068587
(87) Internationale Veröffentlichungsnummer: WO 2018/024331

(56) Entgegenhaltungen:
- WO-A1-2015/024773
- WO-A1-2016/116415
- DE-A1-102011 081 264
- DE-A1-102011 087 603

## Beschreibung

Die Erfindung betrifft Beschichtungsmassen auf Basis von vernetzbaren Massen enthaltend bestimmte silanvernetzende Prepolymere und Siliconharze, Verfahren zu deren Herstellung sowie deren Verwendung zur Beschichtung von Fußböden.

Fußböden bestehen typischerweise aus einer aufeinander aufbauenden Einheit von Untergrund und Nutzschicht. Der Untergrund setzt sich dabei oftmals aus einer aus Beton bestehenden Tragschicht und sich gegebenenfalls darauf befindlichen Zwischenschichten zusammen. Bei der letzteren handelt es sich in der Regel um Estrich oder Gussasphalt. Sie dient dazu, den Untergrund zu ebnen oder auch zum Abbau eines Gefälles. Ebenso sind aber auch andere Untergründe denkbar. Weit verbreitet sind u.a. auch Holzfußböden, z.B. Dielen-, Laminat- oder Parkettböden.

Auf diesen Untergründen wird die eigentliche Oberflächenschicht appliziert. Sie dient dazu, den Untergrund vor mechanischer Abnutzung, aber auch vor Verschmutzung oder chemischer Beanspruchung zu schützen. Gleichzeitig muss sie den optischen Ansprüchen an die Fußbodenbeschichtung gerecht werden.

Wichtige Eigenschaften wie Oberflächenfestigkeit (ermittelbar durch Kratztests), Beständigkeit gegen Chemikalien aber auch gegen Feuchtigkeit und Frost müssen gegeben sein. Von besonderer Bedeutung ist zudem die Notwendigkeit einer geringen Verschmutzungsneigung, was bedeutet, dass die jeweiligen Verschmutzungen rückstandsfrei entfernbar sein sollten. Auch optische Eigenschaften, z.B. farbvertiefende Wirkungen bei Holz- oder Steinfußböden - bei Holzfußböden spricht man hier von einer sogenannten "Anfeuerung" -, stellen wichtige Kriterien dar.

Weit verbreitet sind Oberflächenbeschichtungen auf Basis zementärer Systeme. Diese besitzen jedoch oftmals den Nachteil einer nur mäßigen mechanischen Belastbarkeit, quellen auf bei Exposition gegenüber Feuchte und besitzen keine ausreichende Frostbeständigkeit. Auch ist ihre Optik für viele Anwendungen ungenügend.

Deutlich bessere Eigenschaften weisen oftmals Beschichtungen auf Basis organischer Polymersysteme, insbesondere Epoxidharz- oder Polyurethanbeschichtungen, auf. Hier existieren breite Produktpaletten für die unterschiedlichsten Anwendungen, angefangen mit Beschichtungen für reine Industriefußböden, über Keller- und Lagerraumböden bis hin zu optisch hochwertigen Beschichtungen für Krankenhäuser, Schulen, Kindergärten, Großraumbüros, Eingangshallen oder auch Verkaufs- und Ausstellungsräumen. Organische Lacksysteme kommen auch bei Holzfußböden zum Einsatz. Während bei werkseitigen Beschichtungen des Holzes oftmals UV-härtende Acrylatlacke zum Einsatz kommen, werden bei Beschichtungen und Wiederbeschichtungen von bereits verlegten Holzfußböden ebenfalls vor allem Polyurethansysteme eingesetzt.

Nachteilig an diesen Systemen sind allerdings die toxikologisch bedenklichen Eigenschaften der noch unvernetzten, flüssigen Komponenten. Polyurethanbeschichtungen enthalten Isocyanate, insbesondere auch Restgehalte von als toxikologisch kritisch eingestuften Isocyanatmonomeren. Epoxidharzsysteme hingegen enthalten die ebenfalls als toxikologisch kritisch eingestuften Aminhärter. Beide Systeme zeigen sensibilisierende Eigenschaften.

Zudem handelt es sich bei den meisten Epoxidharz- oder Polyurethanbeschichtungen um anwenderunfreundliche zweikomponentige Systeme.

Gerade unter toxikologischen Gesichtspunkten wären silanvernetzende Beschichtungen, die durch die Kondensationsreaktionen von Alkoxysilylgruppen aushärten, ausgesprochen wünschenswert. Diese Reaktion tritt bei Kontakt mit Luftfeuchtigkeit auf, weshalb derartige Systeme in der Regel einkomponentig verarbeitbar sind. Zudem können die Silylgruppen auch mit einer Vielzahl an reaktiven OH-Gruppen des Untergrundes reagieren, weshalb die entsprechenden Produkte oftmals auffallend gute Haftungseigenschaften aufweisen.

Besonders vorteilhaft in Hinblick auf eine schnelle Aushärtung von silanvernetzenden Beschichtungen ist der Einsatz von sogenannten α-silanterminierten Prepolymeren, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL® STP-E10 oder GENIOSIL® STP-E30 der Wacker Chemie AG, D-München.

Allerdings war es in der Vergangenheit weder auf Basis von α-silanvernetzenden noch mit herkömmlichen silanvernetzenden Prepolymeren möglich, Systeme bereitzustellen, die den sehr hohen mechanischen Anforderungen an eine Fußbodenbeschichtung genügen.

Ein vielversprechender Ansatz wird dabei in WO 2013/026654 beschrieben, bei dem langkettige silanterminierte Polyether mit Molmassen von 12 000 g/Mol mit Phenylsiliconharzen vermischt werden. Die so erhaltenen Massen werden insbesondere als ideale Bindemittel für Klebstoffe mit hoher Härte und Zugscherfestigkeit ausgelobt, es wird aber auch erwähnt, dass derartige Materialien auch als Dichtstoffe, Vergussmassen oder Beschichtungen eingesetzt werden können. Es ist daher denkbar, dass derartige deutlich härtere Bindemittelsysteme auch für Fußbodenbeschichtungen geeignet sein könnten.

Allerdings zeigte sich, dass silanvernetzende Bindemittelsysteme, wie sie in WO 2013/026654 beschrieben werden, keine hinreichend guten Verschmutzungsneigungen aufweisen, als dass man sie für Bodenbeschichtungen einsetzen könnte. Insbesondere gängige Substanzen wie Kaffee, Senf, Ketchup, Balsamicoessig, aber auch Benzin oder Milchsäure führen zu nicht mehr entfernbaren Flecken.

Die Dokumente DE 10 2011 081264 und WO 2016/116415 offenbaren vernetzbare Massen, die als Beschichtungsmassen verwendet werden können.

Aufgabe der Erfindung war daher die Entwicklung von Bodenbeschichtungen auf Basis von unter toxikologischen Gesichtspunkten ausgesprochen vorteilhaften silanvernetzenden Bindemitteln, mit denen die Nachteile der Produkte entsprechend des Standes der Technik überwunden werden können.

Gegenstand der Erfindung sind vernetzbare Beschichtungsmassen (M) enthaltend
(A) 100 Gewichtsteile Verbindungen der Formel

   Y-[(CR¹₂)_{b}-SiRₐ(OR²)₃₋ₐ]ₓ (I),

   wobei
   - Y: einen x-wertigen, über Stickstoff, Sauerstoff, Schwefel oder Kohlenstoff gebundenen Polymerrest bedeutet, dessen zahlenmittlere Molekülmasse 200 bis 10 000 g/Mol beträgt, und der keine aromatischen Strukturelemente mit direkt an den Aromaten gebundene Stickstoff- oder Sauerstoffatomen enthält,
   - R: gleich oder verschieden sein kann und einen einwertigen, gegebenenfalls substituierten, SiC-gebundenen Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann und Wasserstoffatom oder einen einwertigen, gegebenenfalls substituierten Kohlenwasserstoffrest darstellt,
   - x: eine ganze Zahl von 1 bis 10, bevorzugt 1, 2 oder 3, besonders bevorzugt 1 oder 2, ist,
   - a: gleich oder verschieden sein kann und 0, 1 oder 2, bevorzugt 0 oder 1, ist und
   - b: gleich oder verschieden sein kann und eine ganze Zahl von 1 bis 10, bevorzugt 1, 3 oder 4, besonders bevorzugt 1 oder 3, insbesondere 1, ist, und
(B) mindestens 100 Gewichtsteile Siliconharze enthaltend Einheiten der Formel

   R³_{c}(R⁴O)_{d}R⁵ₑSiO_{(4-c-d-e)/2} (II),

   wobei
   - R³: gleich oder verschieden sein kann und Wasserstoffatom, einen einwertigen, SiC-gebundenen, gegebenenfalls substituierten, aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
   - R⁴: gleich oder verschieden sein kann und Wasserstoffatom oder einen einwertigen, gegebenenfalls substituierten Kohlenwasserstoffrest bedeutet,
   - R⁵: gleich oder verschieden sein kann und einen einwertigen, SiC-gebundenen, gegebenenfalls substituierten, aromatischen Kohlenwasserstoffrest bedeutet,
   - c: 0, 1, 2 oder 3 ist,
   - d: 0, 1, 2 oder 3, bevorzugt 0, 1 oder 2, besonders bevorzugt 0 oder 1, ist und
   - e: 0, 1 oder 2, bevorzugt 0 oder 1, ist,
mit der Maßgabe, dass die Summe aus c+d+e kleiner oder gleich 3 ist und in mindestens 40 % der Einheiten der Formel (II) die Summe c+e gleich 0 oder 1 ist.

Außerdem enthalten die erfindungsgemäßen Massen (M) weniger als 100 Gewichtsteile, besonders bevorzugt weniger als 50 Gewichtsteile, insbesondere weniger als 10 Gewichtsteile, Verbindungen (C1) der Formel

Y¹-[(CR¹₂)_{b}-SiRₐ(OR²)₃₋ₐ]ₓ (I'),

wobei Y¹ einen x-wertigen, über Stickstoff, Sauerstoff, Schwefel oder Kohlenstoff gebundenen Polymerrest bedeutet, dessen zahlenmittlere Molekülmasse Mₙ mehr als 10 000 g/Mol beträgt, und R, R¹, R², a, b sowie x jeweils gleich oder verschieden sein können und eine der oben genannten Bedeutungen aufweisen.
In einer besonders bevorzugten Ausführung der Erfindung enthalten die erfindungsgemäßen Massen (M) keine Verbindungen (C1).

Vorzugsweise enthalten die erfindungsgemäßen Massen (M) weniger als 100 Gewichtsteile, besonders bevorzugt weniger als 50 Gewichtsteile, insbesondere weniger als 10 Gewichtsteile Verbindungen (C2), der Formel

Y²-[(CR¹₂)_{b}-SiRₐ(OR²)₃₋ₐ]ₓ (I"),

wobei Y² einen x-wertigen, über Stickstoff, Sauerstoff, Schwefel oder Kohlenstoff gebundenen Polymerrest bedeutet, der aromatische Strukturelemente mit direkt an den Aromaten gebundene Stickstoff- oder Sauerstoffatome enthält, und R, R¹, R², a, b sowie x jeweils gleich oder verschieden sein können und eine der oben genannten Bedeutungen aufweisen.

In einer besonders bevorzugten Ausführung der Erfindung enthalten die erfindungsgemäßen Massen (M) keine Verbindungen (C2).

Die gegebenenfalls eingesetzten Verbindungen (C2) sind ausgesprochen UV-labil und beeinträchtigen somit die UV-Stabilität der resultierenden Beschichtung negativ.

Der Erfindung liegt die überraschende Entdeckung zugrunde, dass Beschichtungen auf Basis der erfindungsgemäßen Massen (M) auf Basis kurzkettiger silanterminierter Polymere (A), die keine oder nur geringe Anteile an entsprechend langkettigen und/oder aromatischen silanterminierten Polymeren (C1) bzw. (C2) und erfindungsgemäß hohen Massenanteilen an Siliconharzen (B) enthalten, eine deutlich bessere Verschmutzungsneigung aufweisen, als Massen, wie sie im Stand der Technik, insbesondere in WO 2013/026654, beschrieben sind.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Die Reste Y weisen vorzugsweise zahlenmittlere Molmassen Mₙ von mindestens 500 g/mol, insbesondere von mindestens 1 000 g/mol auf. Die Reste Y weisen vorzugsweise zahlenmittlere Molmassen Mₙ von höchstens 8 000 g/mol, insbesondere von höchstens 6 000 g/mol auf.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Beispiele für Polymerrest Y sind organische Polymerreste, deren zahlenmittlere Molekülmasse 200 bis 10 000 g/Mol beträgt und die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymetacrylate; Vinylpolymer oder Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=0)-S-, -S-C(=O)-, -S-C(=O)-S-, -C(=O)-, -S-, -O- oder -NR'-an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Sterioisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Bevorzugt handelt es sich bei dem Polymerrest Y um Polyester-, Polyether-, Polyurethan-, Polyalkylen- oder Polyacrylatreste, besonders bevorzugt um Polyurethanreste, Polyesterreste oder Polyoxyalkylenreste, insbesondere um Polyoxypropylenreste, mit der Maßgabe, dass deren zahlenmittlere Molekülmasse 200 bis 10 000 g/Mol beträgt.

Die Komponente (A) kann dabei die auf die beschriebene Weise angebundenen Gruppen -[(CR¹₂) _{b}-SiRₐ(OR²)₃₋ₐ]an beliebigen Stellen im Polymer aufweisen, wie etwa kettenständig und/oder endständig.

Besonders bevorzugt handelt es sich bei Rest Y in Formel (I) um Polyesterreste, Polyurethanreste oder Polyoxyalkylenreste, deren zahlenmittlere Molekülmasse 200 bis 10 000 g/Mol beträgt, an welche die Gruppen -[(CR¹₂)_{b}-SiRₐ(OR²)₃₋ₐ] endständig angebunden sind. Die Reste Y sind vorzugsweise linear oder weisen 1 bis 3 Verzweigungsstellen auf, besonders bevorzugt sind sie linear.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=0)-NR'-, an die Gruppe bzw. Gruppen -[(CR¹₂)_{b}-SiRₐ(OR²)₃₋ₐ] gebunden sind, wobei sämtliche Reste und Indizes eine der oben genannten Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Geeignete Verfahren zur Herstellung einer entsprechenden Komponente (A) sowie auch Beispiele für die Komponente (A) selbst sind unter anderem in EP 1 093 482 B1 (Absätze [0014]-[0023], [0039]-[0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben.

Bei den Polyesterresten Y handelt es sich vorzugsweise um polymere Reaktionsprodukte aus monomeren Dicarbonsäuren und monomeren Diolen, oder aber aus Hydroxycarbonsäuren oder aber aus cyclischen Lactonen wie z.B. ε-Caprolacton.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -O- an die Gruppe bzw. Gruppen -[(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe -[(CR¹₂)_{b}-SiRₐ(OR²)₃₋ₐ] gebunden.

Geeignete Verfahren zur Herstellung einer Komponente (A), bei der Y für einen Polyoxyalkylenrest steht, sowie auch Beispiele für eine entsprechende Komponente (A) selbst sind unter anderem in EP 1 535 940 B1 (Absätze [0005]-[0025] sowie Beispiele 1-3 und Vergleichsbeispiel 1-4) oder EP 1 896 523 B1 (Absätze [0008]-[0047]) beschrieben.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (IV),

-O-C(=O)-NH-(CR¹₂)_{b}-SiRₐ(OR²)₃₋ₐ (V)

oder

-O⁻(CR¹₂)_{b}-SiRₐ(OR²)₃₋ₐ (VI),

wobei die Reste und Indizes eine der oben dafür angegebenen Bedeutungen haben.

Sofern es sich bei den Verbindungen (A) um Polyurethane handelt, was bevorzugt ist, weisen diese vorzugsweise eine oder mehrere der Endgruppen

-NH-C(=O)-NR'-(CH₂)₃-Si(OCH₃)₃,

-NH-C(=O)-NR'-(CH₂)₃-Si(OC₂H₅)₃,

-O-C(=O)-NH-(CH₂)₃-Si(OCH₃)₃

oder

-O-C(=O)-NH-(CH₂)₃-Si(OC₂H₅)₃

auf,
wobei R' eine der oben genannten Bedeutungen hat.

Sofern es sich bei den Verbindungen (A) um Polypropylenglycole handelt, was besonders bevorzugt ist, weisen diese vorzugsweise eine oder mehrere der Endgruppen

-O-(CH₂)₃-Si(CH₃)(OCH₃)₂,

-O-(CH₂)₃-Si(OCH₃)₃,

-O-C(=O)-NH-(CH₂)₃-Si(OC₂H₅)₃,

-O-C(=O)-NH-CH₂-Si(CH₃)(OC₂H₅)₂,

-O-C(=O)-NH-CH₂-Si(OCH₃)₃,

-O-C(=O)-NH-CH₂-Si(CH₃)(OCH₃)₂

oder

-O-C(=O)-NH-(CH₂)₃-Si(OCH₃)₃

auf,
wobei die beiden letztgenannten Endgruppen besonders bevorzugt werden.

Die mittleren Molekulargewichte Mₙ der Verbindungen (A) betragen vorzugsweise mindestens 500 g/mol, besonders bevorzugt mindestens 1 000 g/mol, und vorzugsweise höchstens 10 000 g/mol, besonders bevorzugt höchstens 8 000 g/mol, insbesondere höchstens 6 500 g/mol.

Die Viskosität der Verbindungen (A) beträgt vorzugsweise mindestens 0,2 Pas, bevorzugt mindestens 1 Pas, und vorzugsweise höchstens 8 Pas, bevorzugt höchstens 4 Pas, jeweils gemessen bei 23°C.

Die Viskosität wird im Rahmen der vorliegenden Erfindung nach einer Temperierung auf 23°C mit einem DV 3 P-Rotationsviskosimeter von Fa. A. Paar (Brookfieldsystme), unter Verwendung von Spindel 5 bei 2,5 UpM entsprechend der ISO 2555 bestimmt.

Die erfindungsgemäß eingesetzten Verbindungen (A) können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Vorzugsweise enthalten die erfindungsgemäßen Massen (M) Verbindungen (A) in Konzentrationen von höchstens 40 Gew.-%, besonders bevorzugt höchstens 30 Gew.-%, und vorzugsweise mindestens 3 Gew.-%, besonders bevorzugt mindestens 5 Gew.-%.

Bezogen auf 100 Gewichtsteile der Komponente (A), enthalten die erfindungsgemäßen Massen (M) vorzugsweise mindestens 150 Gewichtsteile, besonders bevorzugt mindestens 200 Gewichtsteile, insbesondere mindestens 300 Gewichtsteile, Komponente (B). Bezogen auf 100 Gewichtsteile der Komponente (A), enthalten die erfindungsgemäßen Massen (M) vorzugsweise höchstens 5000 Gewichtsteile, besonders bevorzugt höchstens 2500 Gewichtsteile, insbesondere höchstens 1500 Gewichtsteile, Komponente (B).

Komponente (B) besteht vorzugsweise zu mindestens 90 Gew.-% aus Einheiten der Formel (II). Besonders bevorzugt besteht Komponente (B) ausschließlich aus Einheiten der Formel (II).

Beispiele für Reste R³ sind die oben für R angegebenen aliphatischen Reste. Es kann sich bei Rest R³ aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste. Ein besonders gängiges Beispiel für einen zweiwertigen aliphatischen Rest stellt der Ethylenrest dar.

Bevorzugt handelt es sich bei Rest R³ jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 8 Kohlenstoffatomen, wie etwa Methyl-, Ethyl-, Propyl-, Butyl-, n-Octyl- oder i-Octylreste, insbesondere um den i-Octyl- oder Methylrest, wobei der Methylrest ganz besonders bevorzugt wird.

Beispiele für Rest R⁴ sind Wasserstoffatom oder die für Rest R angegebenen Beispiele.

Bevorzugt handelt es sich bei Rest R⁴ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Reste R⁵ sind die oben für R angegebenen aromatischen Reste.

Bevorzugt handelt es sich bei Rest R⁵ um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphthyl- oder Styrylreste, besonders bevorzugt um den Phenylrest.

Bevorzugt werden als Komponente (B) Siliconharze eingesetzt, in denen mindestens 90% aller Reste R³ für n-Octyl-, i-Octyl- oder Methylrest stehen, wobei besonders bevorzugt mindestens 90% aller Reste R³ für Methylrest stehen.

Bevorzugt werden als Komponente (B) Siliconharze eingesetzt, in denen mindestens 90% aller Reste R⁴ für Methyl-, Ethyl-, Propyl- oder Isopropylrest stehen.

Bevorzugt werden als Komponente (B) Siliconharze eingesetzt, in denen mindestens 90% aller Reste R⁵ für Phenylrest stehen.

Vorzugsweise werden erfindungsgemäß Siliconharze (B) eingesetzt, die mindestens 20%, besonders bevorzugt mindestens 40%, Einheiten der Formel (II) aufweisen, in denen c gleich 0 ist, jeweils bezogen auf die Gesamtzahl an Einheiten der Formel (II) .

Vorzugsweise werden Siliconharze (B) eingesetzt, die, jeweils bezogen auf die Gesamtzahl an Einheiten der Formel (II), mindestens 70%, besonders bevorzugt mindestens 80%, Einheiten der Formel (II) aufweisen, in denen d für den Wert 0 oder 1 steht.

Vorzugsweise werden als Komponente (B) Siliconharze eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 steht.

In einer besonderen Ausführungsform der Erfindung werden Siliconharze (B) eingesetzt, die ausschließlich Einheiten der Formel (II) aufweisen, in denen e gleich 1 ist.

In einer besonders bevorzugten Ausführung der Erfindung werden als Komponente (B) Siliconharze eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 und c für den Wert 0 stehen.

Vorzugsweise werden als Komponente (B) Siliconharze eingesetzt, die, jeweils bezogen auf die Gesamtzahl an Einheiten der Formel (II), mindestens 50%, bevorzugt mindestens 60%, besonders bevorzugt mindestens 70%, Einheiten der Formel (II) aufweisen, in denen die Summe c+e gleich 0 oder 1 ist.

Beispiele für die erfindungsgemäß eingesetzten Siliconharze (B) sind Organopolysiloxanharze, die im Wesentlichen, vorzugsweise ausschließlich, aus Einheiten bestehen, ausgewählt aus (Q)-Einheiten der Formeln SiO_{4/2}, Si(OR⁴)O_{3/2}, Si(OR⁴)₂O_{2/2} und Si(OR⁴)₃O_{1/2}, (T)-Einheiten der Formeln PhSiO_{3/2}, PhSi(OR⁴)O_{2/2}, PhSi(OR⁴)₂O_{1/2}, MeSiO_{3/2}, MeSi (OR⁴)O_{2/2}, MeSi (OR⁴)₂O_{1/2}, i-OctSiO_{3/2}, i-OctSi(OR⁴)O_{2/2}, i-OctSi(OR⁴)₂O_{1/2}, n-OctSiO_{3/2}, n-OctSi(OR⁴)O_{2/2} und n-OctSi(OR⁴)₂O_{1/2}, (D) -Einheiten der Formeln Me₂SiO_{2/2} und Me₂Si (OR⁴)O_{1/2} sowie (M) -Einheiten der Formel Me₃SiO_{1/2}, wobei Me für Methylrest, Ph für Phenylrest, n-Oct für n-Octylrest und i-Oct für Isooctylrest steht und R⁴ für Wasserstoffatom oder gegebenenfalls mit Halogenatomen substituierte Alkylreste mit 1 bis 10 Kohlenstoffatomen, besonders bevorzugt für unsubstituierte Alkylreste mit 1 bis 4 Kohlenstoffatomen, stehen, wobei das Harz pro Mol (T)-Einheiten bevorzugt 0-2 Mol (Q)-Einheiten, 0-2 Mol (D)-Einheiten und 0-2 Mol (M)-Einheiten aufweist.

Bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁴)O_{2/2} und PhSi(OR⁴)₂O_{1/2} sowie T-Einheiten der Formeln MeSiO_{3/2}, Me-Si(OR⁴)O_{2/2} und MeSi (OR⁴)₂O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen stehen.

Weitere bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁴)O_{2/2} und PhSi (OR⁴)₂O_{1/2}, T-Einheiten der Formeln MeSiO_{3/2}, MeSi(OR⁴)O_{2/2} und MeSi(OR⁴)₂O_{1/2} sowie D-Einheiten der Formeln Me₂SiO_{2/2} und Me₂Si(OR⁴)O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, mit einem molaren Verhältnis von Phenylsilicon- zu Methylsilicon-Einheiten von 0,5 bis 4,0. Der Gehalt an D-Einheiten in diesen Siliconharzen liegt vorzugsweise unter 10 Gew.-%.

Besonders bevorzugte Beispiele für die erfindungsgemäß eingesetzten Siliconharze (B) sind Organopolysiloxanharze, die zu 80%, vorzugsweise zu 90%, insbesondere ausschließlich, aus T-Einheiten der Formeln PhSiO_{3/2}, PhSi (OR⁴)O_{2/2} und PhSi (OR⁴)₂O_{1/2} bestehen, wobei Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, jeweils bezogen auf die Gesamtzahl an Einheiten.

Vorzugsweise besitzen die erfindungsgemäß eingesetzten Siliconharze (B) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 10 000 g/mol, insbesondere bei höchstens 3 000 g/mol.

Die erfindungsgemäß eingesetzten Siliconharze (B) können bei 23°C und 1000 hPa sowohl fest als auch flüssig sein, wobei Siliconharze (B) bevorzugt flüssig sind. Vorzugsweise besitzen die Siliconharze (B) bei 23°C eine Viskosität von 10 bis 100 000 mPas, vorzugsweise von 50 bis 50 000 mPas, insbesondere von 100 bis 20 000 mPas.

Die erfindungsgemäß eingesetzten Siliconharze (B) besitzen vorzugsweise eine Polydispersität (M_{w}/Mₙ) von maximal 5, bevorzugt von maximal 3.

Die massenmittlere Molmasse M_{w} wird dabei ebenso wie die zahlenmittlere Molmassen Mₙ mittels Size Exclusion Chromatography (SEC) gegen Polystyrol-Standard, in THF, bei 60 °C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Siliconharze (B) können sowohl in reiner Form als auch in Form einer Mischung mit einem geeigneten Lösungsmittel (BL) eingesetzt werden.

Als Lösungsmittel (BL) können dabei sämtliche bei Raumtemperatur gegenüber den Komponenten (A) und (B) nicht reaktive Verbindungen mit einem Siedepunkt <250 °C bei 1013 mbar eingesetzt werden.

Beispiele für gegebenenfalls eingesetzte Lösungsmittel (BL) sind Ether, wie z.B. Diethylether, Methyl-t-butylether, Etherderivate des Glycols und THF; Ester, wie z.B. Ethylacetat, Butylacetat und Glycolester; aliphatische Kohlenwasserstoffe, wie z.B. Pentan, Cyclopentan, Hexan, Cyclohexan, Heptan, Octan oder auch längerkettige verzweigte und unverzweigte Alkane; Ketone, wie z.B. Aceton und Methylethylketon; Aromaten, wie z.B. Toluol, Xylol, Ethylbenzol und Chlorbenzol; oder auch Alkohole, wie z.B. Methanol, Ethanol, Glycol, Propanol, iso-Propanol, Glycerin, Butanol, iso-Butanol und t-Butanol.

Viele kommerziell erhältlichen Harze (B), wie z.B. die Harze SILRES® SY 231, SILRES® IC 231, SILRES® IC 368 oder SILRES® IC 678 SILRES® BS 1268der Wacker Chemie AG, D-München, sind zwar bei 23 °C und 1013 hPa flüssig, enthalten herstellungsbedingt aber dennoch kleine Mengen Lösungsmittel (BL), insbesondere Toluol. So enthalten die oben genannten Harze etwa 0,1 Gew.-% Toluol, bezogen auf das Gesamtgewicht des Harzes.

Toluolfreie Harze (B) sind ebenfalls kommerziell verfügbar, z.B. GENIOSIL® LX 678 oder GENIOSIL® LX 368 der Wacker Chemie AG, D-München.

In einer bevorzugten Ausführung der Erfindung werden als Komponente (B) Siliconharze eingesetzt, die weniger als 0,1 Gew.-%, bevorzugt weniger als 0,05 Gew.-%, besonders bevorzugt weniger als 0,02 Gew.-%, insbesondere weniger als 0,01 Gew.-%, aromatische Lösungsmittel (BL) enthalten.

In einer besonders bevorzugten Ausführung der Erfindung werden als Komponente (B) Siliconharze (B) eingesetzt, die mit Ausnahme von Alkoholen R⁴OH weniger als 0,1 Gew.-%, bevorzugt weniger als 0,05 Gew.-%, besonders bevorzugt weniger als 0,02 Gew.-%, insbesondere weniger als 0,01 Gew.-%, Lösungsmittel (BL) enthalten, wobei R⁴ die oben genannte Bedeutung aufweist.

In einer ganz besonders bevorzugten Ausführung der Erfindung werden als Komponente (B) Siliconharze eingesetzt, die mit Ausnahme von Alkoholen R⁴OH überhaupt keine Lösungsmittel (BL) enthalten, wobei R⁴ die oben genannte Bedeutung aufweist und Alkohole R⁴OH in Mengen von bevorzugt maximal 5 Gew.-%, besonders bevorzugt 0 bis 1 Gew.-%, in der Regel herstellungsbedingt, enthalten sind.

Bei den erfindungsgemäß eingesetzten Siliconharzen (B) handelt es sich um handelsübliche Produkte oder können nach in der Siliciumchemie gängigen Methoden hergestellt werden.

Bei den Verbindungen (C1) oder (C2) handelt es sich um Verbindungen, die auf dieselbe Weise wie die Verbindungen (A) hergestellt werden können, nur dass hier Polymere mit Polymerresten Y zu Einsatz kommen, die über entsprechend höhere Molekülmassen und/oder aromatische Strukturelemente mit direkt an den Aromaten gebundenen Stickstoff- oder Sauerstoffatomen verfügen. Beispiele für silanterminierte Polymere (C1) sind u.a. unter der Bezeichnung GENIOSIL® STP-E10, GENIOSIL® STP-E15, GENIOSIL® STP-E30 oder GENIOSIL® STP-E35 der Fa. Wacker Chemie AG (D-München) erhältliche Produkte.

Falls die erfindungsgemäßen Massen (M) Verbindungen (C1) und/oder (C2) enthalten, handelt es sich um Mengen von vorzugsweise insgesamt höchstens 10 Gewichtsteilen, besonders bevorzugt von insgesamt höchstens 5 Gewichtsteilen, jeweils bezogen auf 100 Gewichtsteile der erfindungsgemäßen Masse (M). Insbesondere bevorzugt enthalten die erfindungsgemäßen Massen (M) weder Verbindung (C1) noch Verbindung (C2).

Zusätzlich zu den eingesetzten Komponenten (A), (B) sowie den gegebenenfalls eingesetzten Komponenten (C1) und (C2) können die erfindungsgemäßen Massen (M) alle weiteren Stoffe enthalten, die auch bisher in vernetzbaren Massen eingesetzt wurden und die unterschiedlich sind zu Komponenten (A), (B), (C1) und (C2), wie z.B. Stickstoff aufweisende Organosiliciumverbindung (D), Katalysator (E), Haftvermittler (F), Wasserfänger (G), Füllstoffe (H), Additive (I) und Zuschlagstoffe (J).

Bevorzugt handelt es sich bei Komponente (D) um Organosiliciumverbindungen enthaltend Einheiten der Formel

DₕSi(OR⁷)_{g}R⁶_{f}O(_{4-f-g-h})_{/2} (III),

worin
R⁶ gleich oder verschieden sein kann und einen einwertigen, gegebenenfalls substituierten SiC-gebundenen, von Stickstoff freien organischen Rest bedeutet,
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
f 0, 1, 2 oder 3, bevorzugt 1, ist,
g 0, 1, 2 oder 3, bevorzugt 1, 2 oder 3, besonders bevorzugt 1 oder 3, ist und
h 0, 1, 2, 3 oder 4, bevorzugt 1, ist,
mit der Maßgabe, dass die Summe aus f+g+h kleiner oder gleich 4 ist und pro Molekül mindestens ein Rest D anwesend ist.

Bei den erfindungsgemäß gegebenenfalls eingesetzten Organosiliciumverbindungen (D) kann es sich sowohl um Silane handeln, d.h. Verbindungen der Formel (III) mit f+g+h=4, als auch um Siloxane, d.h. Verbindungen enthaltend Einheiten der Formel (III) mit f+g+h≤3, wobei es sich bevorzugt um Silane handelt.

Beispiele für Rest R⁶ sind die für R angegebenen Beispiele.

Bei Rest R⁶ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R⁷ sind die für Rest R angegebenen Beispiele.

Bei den Resten R⁷ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- oder Ethylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH (CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆HₙNH(CH₂)₃-Rest.

Beispiele für die erfindungsgemäß gegebenenfalls eingesetzten Silane der Formel (III) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH) ₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH (CH₂)₃-Si(OCH₃)₃, cyclo-C₆H₁₁NH (CH₂)₃-Si(OC₂H₅)₃, cyclo-C₆H₁₁NH (CH₂)₃-Si(OCH₃)₂CH₃, cyclo-C₆H₁₁NH (CH₂)₃-Si(OC₂H₅)₂CH₃, cyclo-C₆H₁₁NH (CH₂)₃-Si(OH) ₃, cyclo-C₆H₁₁NH (CH₂)₃-Si(OH) ₂CH₃, Phenyl-NH (CH₂)₃-Si(OCH₃)₃, Phenyl-NH(CH₂)₃-Si(OC₂H₅)₃, Phenyl-NH (CH₂)₃-Si(OCH₃)₂CH₃, Phenyl-NH (CH₂)₃-Si(OC₂H₅)₂CH₃, Phenyl-NH (CH₂)₃-Si(OH) ₃, Phenyl-NH (CH₂)₃-Si(OH) ₂CH₃, HN ((CH₂)₃-Si(OCH₃)₃)₂, HN ((CH₂)₃-Si(OC₂H₅)₃)₂ HN ((CH₂)₃-Si(OCH₃)₂CH₃)₂, HN ((CH₂)₃-Si(OC₂H₅)₂CH₃)₂, cyclo-C₆HₙNH(CH₂)-Si(OCH₃)₃, cyclo-C₆H₁₁NH(CH₂)-Si(OC₂H₅)₃, cyclo-C₆H₁₁NH (CH₂)-Si(OCH₃)₂CH₃, cyclo-C₆H₁₁NH(CH₂)-Si(OC₂H₅)₂CH₃, cyclo-C₆HₙNH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃, H₂N(CH₂)₂NH(CH₂)₃-Si(OC₂H₅)₃, H₂N(CH₂)₂NH(CH₂)₃-Si(OC₂H₅)₂CH₃ oder jeweils deren Teilhydrolysate besonders bevorzugt sind.

Die erfindungsgemäß gegebenenfalls eingesetzten Organosiliciumverbindungen (D) können in den erfindungsgemäßen Massen (M) auch die Funktion eines Härtungskatalysators oder -cokatalysators übernehmen.

Des Weiteren können die erfindungsgemäß gegebenenfalls eingesetzten Organosiliciumverbindungen (D) als Haftvermittler und/oder als Wasserfänger wirken.

Die erfindungsgemäß gegebenenfalls eingesetzten Organosiliciumverbindungen (D) sind handelsübliche Produkte bzw. nach in der Chemie gängigen Verfahren herstellbar.

Falls die erfindungsgemäßen Massen (M) Komponente (D) enthalten, handelt es sich um Mengen von bevorzugt 0,1 bis 40 Gewichtsteilen, besonders bevorzugt 0,2 bis 30 Gewichtsteilen, insbesondere 0,1 bis 5 Gewichtsteilen, jeweils bezogen auf 100 Gewichtsteile der gesamten erfindungsgemäßen Masse (M). Die erfindungsgemäßen Massen (M) enthalten bevorzugt Komponente (D).

Bei den in den erfindungsgemäßen Massen (M) gegebenenfalls eingesetzten Katalysatoren (E) kann es sich um beliebige, bisher bekannte Katalysatoren für durch Silankondensation härtende Massen handeln.

Beispiele für metallhaltige Härtungskatalysatoren (E) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (E) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin oder Salze von Carbonsäuren, wie Natriumacetat.

Ebenfalls als Katalysator (E) können saure Verbindungen eingesetzt werden, wie Phosphorsäure und ihre teilveresterten Derivate, Toluolsulfonsäure, Schwefelsäure, Salpetersäure oder auch organische Carbonsäuren, z.B. Essigsäure und Benzoesäure.

Falls die erfindungsgemäßen Massen (M) Katalysatoren (E) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile der erfindungsgemäßen Masse (M).

Bei den erfindungsgemäßen Massen kann vorzugsweise dann auf metallhaltige Katalysatoren (E), und insbesondere auf Zinn enthaltende Katalysatoren, verzichtet werden, wenn die Komponente (A) ganz oder zumindest teilweise, d.h. zu mindestens 40 Gew.-%, vorzugsweise zu mindestens 50 Gew.-%, aus Verbindungen der Formel (I) besteht, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Massen (M) gegebenenfalls eingesetzten Haftvermittlern (F) kann es sich um beliebige, bisher für durch Silankondensation härtende Systeme beschriebene Haftvermittler handeln.

Beispiele für Haftvermittler (F) sind Epoxysilane, wie 3-Glycidoxypropyltrimethoxysilane, 3-Glycidoxypropyl-methyldimethoxysilan, 3-Glycidoxypropyltriethoxysilan oder 3-Glycidoxypropyl-metyhldiethoxysilan, 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethyl-methyldimethoxysilane, Acryloxymethyl-triethoxysilan und Acryloxymethyl-methyldiethoxysilan sowie deren Teilhydrolysate.

Falls die erfindungsgemäßen Massen (M) Haftvermittler (F) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile der erfindungsgemäßen Masse (M).

In einer besonders bevorzugten Ausführung der Erfindung enthalten die erfindungsgemäßen Beschichtungsmassen sowohl Epoxysilane, insbesondere 3-Glycidoxypropyltrimethoxysilan, 3-Glycidoxypropyl-methyldimethoxysilan, 3-Glycidoxypropyltriethoxysilan oder 3-Glycidoxypropyl-metyhldiethoxysilan oder deren Teilhydrolysate, als auch die als bevorzugt beschriebenen Verbindungen (D), insbesondere H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃, H₂N(CH₂)₂NH(CH₂)₃-Si(OC₂H₅)₃, H₂N(CH₂)₂NH(CH₂)₃-Si(OC₂H₅)₂CH₃ oder deren Teilhydrolysate, in den jeweils als bevorzugt angegebenen Mengen.

Insbesondere bevorzugt wird eine Ausführung der Erfindung, in der die erfindungsgemäßen Beschichtungsmassen sowohl Epoxysilane, insbesondere 3-Glycidoxypropyltrimethoxysilan, 3-Glycidoxypropyl-methyldimethoxysilan, 3-Glycidoxypropyltriethoxysilan oder 3-Glycidoxypropyl-metyhldiethoxysilan oder deren Teilhydrolysate enthalten, als auch die als bevorzugt beschriebenen Verbindungen (D), welche über eine Dialkoxysilylgruppe verfügen, insbesondere H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₂CH₃, H₂N(CH₂)₂NH(CH₂)₃-Si(OC₂H₅)₂CH₃ oder deren Teilhydrolysate, in den jeweils als bevorzugt angegebenen Mengen.

Bei den in den erfindungsgemäßen Beschichtungsmassen (M) gegebenenfalls eingesetzten Wasserfängern (G) kann es sich um beliebige, für durch Silankondensation härtende Systeme bisher beschriebene Wasserfänger handeln.

Beispiele für Wasserfänger (G) sind Silane wie Vinyltrimethoxysilan, Vinyltriethoxysilan, Vinylmethyldimethoxysilan, Tetraethoxysilan, O-Methylcarbamatomethyl-methyldimethoxysilan, O-Methylcarbamatomethyl-trimethoxysilan, O-Ethylcarbamatomethylmethyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan, wobei Vinyltrimethoxysilan bevorzugt ist.

Falls die erfindungsgemäßen Beschichtungsmassen (M) Wasserfänger (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse (M).

Bei den in den erfindungsgemäßen Massen gegebenenfalls eingesetzten Füllstoffen (H) kann es sich um beliebige, bisher bekannte Füllstoffe handeln.

Beispiele für Füllstoffe (H) sind nicht verstärkende Füllstoffe, also Füllstoffe mit einer BET-Oberfläche von vorzugsweise bis zu 50 m²/g, wie Quarz, insbesondere Quarzmehl, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche oder Aluminiumtrihydroxid. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Die erfindungsgemäßen Massen können nur einen Füllstofftyp oder auch eine Mischung aus mehreren verschiedenen Füllstoffen (H) enthalten.

Bevorzugt handelt es sich bei den gegebenenfalls eingesetzten Füllstoffen (H) um Quarzmehl, Calciumcarbonat, Talkum, Aluminiumtrihydroxid oder Kieselsäure, wobei Quarzmehl besonders bevorzugt wird.

Gegebenenfalls eingesetzte Füllstoffe (H) haben einen Feuchtigkeitsgehalt von bevorzugt unter 1 Gew.-%, besonders bevorzugt von unter 0,5 Gew.-%.

Falls die erfindungsgemäßen Massen Füllstoffe (H) enthalten, handelt es sich um Mengen von vorzugsweise 5 bis 90 Gewichtsteilen, besonders bevorzugt 10 bis 80 Gewichtsteilen, insbesondere 15 bis 70 Gewichtsteilen, jeweils bezogen auf 100 Gewichtsteile erfindungsgemäße Masse (M).

Bei den in den erfindungsgemäßen Massen (M) gegebenenfalls eingesetzten Additiven (I) kann es sich um beliebige, bisher bekannte für silanvernetzende Systeme typische Additive handeln.

Bei den erfindungsgemäß gegebenenfalls eingesetzten Additiven (I) handelt es sich um von den bisher genannten Komponenten abweichende Verbindungen, bevorzugt um Antioxidantien, UV-Stabilisatoren, wie z.B. UV-Absorber oder sog. HALS-Verbindungen, Fungizide, Biozide oder Topfkonservierer, handelsübliche Entschäumer und/oder Entlüfter, z.B. SILFOAM® SC 120, SILFOAM® 124 oder SILFOAM® 155 der Wacker Chemie AG, D-München oder auch Produkte der Firmen BYK (D-Wesel), handelsübliche Netzmittel, z.B. der Firma BYK (D-Wesel), Pigmente, wie z.B. Titandioxid oder organische Farbpigmente, oder Mattierungsmittel, wie z.B. Deuteron M 648, Deuteron Pergolak M3 oder auch die verschiedenen Deuteron ST-S Typen.

Bevorzugt handelt es sich bei den gegebenenfalls eingesetzten Additiven (I) um Mattierungsmittel.

Mattierungsmittel werden vorzugsweise in Mengen von mindestens 2,5 Gew.-%, insbesondere von mindestens 5 Gew.-%, eingesetzt. Mattierungsmittel werden vorzugsweise in Mengen von höchstens 60 Gew.-%, insbesondere von höchstens 50 Gew.-%, jeweils bezogen auf das Gesamtgewicht der erfindungsgemäßen Masse, eingesetzt.

Falls die erfindungsgemäßen Beschichtungen Additive (I) enthalten, handelt es sich um Mengen von vorzugsweise 0,01 bis 30 Gewichtsteilen, besonders bevorzugt 0,1 bis 20 Gewichtsteilen, jeweils bezogen auf 100 Gewichtsteile erfindungsgemäße Masse (M). Die erfindungsgemäßen Beschichtungsmassen enthalten bevorzugt Additive (I).

Bei den erfindungsgemäß gegebenenfalls eingesetzten Zuschlagsstoffen (J) handelt es sich bevorzugt um Tetraalkoxysilane, z.B. Tetraethoxysilan, und/oder deren Teilkondensate, Weichmacher, Reaktivverdünner, Flammschutzmittel oder organische Lösungsmittel.

Beispiele für Weichmacher (J) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate; Phosphorsäureester; Sulfonsäureester; Polyester; Polyether, wie z.B. Polyethylenglycole und Polypropylenglycole mit Molmassen von vorzugsweise 1000 bis 10 000 g/mol; Polystyrole; Polybutadiene; Polyisobutylene; paraffinische Kohlenwasserstoffe und hochmolekulare, verzweigte Kohlenwasserstoffe.

Vorzugsweise enthalten die erfindungsgemäßen Beschichtungsmassen (M) keine Weichmacher (J).

Bevorzugte Reaktivverdünner (J) sind Verbindungen, die Alkylketten mit 6 bis 40 Kohlenstoffatome enthalten und eine gegenüber den Verbindungen (A) reaktive Gruppe besitzen, wie beispielsweise Isooctyltrimethoxysilan, Isooctyltriethoxysilan, *n-*Octyltrimethoxysilan, n-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan oder Hexadecyltriethoxysilan.

Als Flammschutzmittel (J) können alle typischen Flammschutzmittel eingesetzt werden, insbesondere halogenierte Verbindungen und Derivate, insbesondere von Komponente (E) abweichende (Teil-)Ester der Phosphorsäure.

Beispiele für organische Lösungsmittel (J) sind die bereits oben als Lösungsmittel (BL) genannten Verbindungen, bevorzugt Alkohole, insbesondere Ethanol.

Vorzugsweise enthalten die erfindungsgemäßen Beschichtungsmassen (M) weniger als 50 Gewichtsteile, besonders bevorzugt weniger als 10 Gewichtsteile, insbesondere weniger als 5 Gesichtsteile, organische Lösungsmittel, jeweils bezogen auf 100 Gewichtsteile der erfindungsgemäßen Masse (M). In einer besonders bevorzugten Ausführungsform sind die erfindungsgemäßen Massen frei von organischen Lösungsmitteln.

Falls die erfindungsgemäßen Beschichtungsmassen Komponenten (J) enthalten, handelt es sich um Mengen von bevorzugt 0,1 bis 50 Gewichtsteilen, besonders bevorzugt 0,5 bis 20 Gewichtsteilen, insbesondere 1 bis 10 Gewichtsteilen, jeweils bezogen auf 100 Gewichtsteile erfindungsgemäße Masse (M).

Bei den erfindungsgemäßen Beschichtungsmassen (M) handelt es sich vorzugsweise um solche enthaltend
(A) 100 Gewichtsteile Verbindungen der Formel (I) und
(B) mindestens 100 Gewichtsteile Siliconharze enthaltend Einheiten der Formel (II) sowie mindestens eine weitere Komponente ausgewählt aus
(D) Stickstoff aufweisende Organosiliciumverbindung,
(E) Katalysatoren,
(F) Haftvermittler,
(G) Wasserfänger,
(H) Füllstoffe,
(I) Additive und
(J) Zuschlagstoffe.

Bei den erfindungsgemäßen Beschichtungsmassen handelt es sich bevorzugt um solche enthaltend
(A) 100 Gewichtsteile Verbindungen der Formel (I),
(B) 100 bis 1000 Gewichtsteile Siliconharze enthaltend Einheiten der Formel (II),
(C1) weniger als 100 Gewichtsteile Verbindungen der Formel (I'),
(C2) weniger als 100 Gewichtsteile Verbindungen der Formel (I''),
(D) 0,1 bis 40 Gewichtsteile Stickstoff aufweisende Organosiliciumverbindung,
   gegebenenfalls
(E) Katalysatoren,
   gegebenenfalls
(F) Haftvermittler,
   gegebenenfalls
(G) Wasserfänger,
   gegebenenfalls
(H) Füllstoffe,
   gegebenenfalls
(I) Additive und
   gegebenenfalls
(J) Zuschlagstoffe.

Bei den erfindungsgemäßen Beschichtungsmassen handelt es sich besonders bevorzugt um solche enthaltend
(A) 100 Gewichtsteile Verbindungen der Formel (I),
(B) 150 bis 2500 Gewichtsteile Siliconharze bestehend aus Einheiten der Formel (II),
(C1) weniger als 50 Gewichtsteile Verbindungen der Formel (I'),
(C2) weniger als 50 Gewichtsteile Verbindungen der Formel (I''),
(D) 0,5 bis 30 Gewichtsteile Stickstoff aufweisende Organosiliciumverbindung,
   gegebenenfalls
(E) Katalysatoren,
   gegebenenfalls
(F) Haftvermittler,
   gegebenenfalls
(G) Wasserfänger,
   gegebenenfalls
(H) Füllstoffe,
   gegebenenfalls
(I) Additive und
   gegebenenfalls
(J) Zuschlagstoffe.

Bei den erfindungsgemäßen Beschichtungsmassen handelt es sich insbesondere um solche enthaltend
(A) 100 Gewichtsteile Verbindungen der Formel (I),
(B) 200 bis 1500 Gewichtsteile Siliconharze bestehend aus Einheiten der Formel (II),
(C1) weniger als 50 Gewichtsteile Verbindungen der Formel (I'),
(C2) weniger als 50 Gewichtsteile Verbindungen der Formel (I''),
(D) 0,5 bis 15 Gewichtsteile Komponente (D),
   gegebenenfalls
(E) Katalysatoren,
   gegebenenfalls
(F) Haftvermittler,
   gegebenenfalls
(G) Wasserfänger,
   gegebenenfalls
(H) Füllstoffe,
   gegebenenfalls
(I) Additive und
(J) Zuschlagstoffe.

Die erfindungsgemäßen Beschichtungsmassen enthalten außer den genannten Komponenten (A) bis (J) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die Herstellung der erfindungsgemäßen Beschichtungsmassen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Zusammensetzung durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen.

Falls erwünscht, kann dieses Vermischen aber auch bei höheren Temperaturen erfolgen, z.B. bei Temperaturen im Bereich von 30 bis 130 °C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Bei einem bevorzugten Vermischen erfolgt das Mischen unter weitgehendem oder vollständigem Ausschluss von Wasser und Luftfeuchtigkeit.

Das erfindungsgemäße Verfahren kann kontinuierlich oder diskontinuierlich durchgeführt werden.

Bei den erfindungsgemäßen Beschichtungsmassen handelt es sich bevorzugt um einkomponentige, unter Ausschluss von Wasser lagerfähige, bei Zutritt von Wasser bei Raumtemperatur vernetzbare Massen. Die erfindungsgemäßen Beschichtungsmassen können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Beschichtungsmassen reicht der übliche Wassergehalt der Luft aus. Die Vernetzung der erfindungsgemäßen Beschichtungsmassen erfolgt vorzugsweise bei Raumtemperatur. Sie kann, falls erwünscht, auch bei höheren oder niedrigeren Temperaturen als Raumtemperatur, z.B. bei -5 ° bis 15 °C oder bei 30 °C bis 80 °C und/oder mittels des normalen Wassergehaltes der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen Massen.

Bevorzugt handelt es sich bei den Formkörpern um Beschichtungen. Die ausgehärteten Beschichtungen weisen vorzugsweise eine Dicke von 0,01 bis 3 mm, besonders bevorzugt von 0,05 bis 1,5 mm, insbesondere von 0,1 bis 1 mm auf.

Ein weiterer Gegenstand der Erfindung ist ein Verfahren zur Herstellung von Beschichtungen, bei dem die erfindungsgemäße Beschichtungsmasse auf mindestens ein Substrat aufgebracht und anschließend vernetzen gelassen wird.

Bei dem Substrat handelt es sich bevorzugt um Holz oder mineralische Materialien, besonders bevorzugt um Holz, Beton- oder Estrichflächen, insbesondere um Holz-, Beton- oder Estrichfußböden.

Die erfindungsgemäßen Beschichtungen besitzen dabei den Vorteil einer guten Schmutzabweisung. Auch stark färbende Verunreinigungen wie Kaffee, Balsamicoessig, Rotwein, Ketchup oder auch Altöl können auch nach mehrstündigen Einwirkzeiten rückstandslos entfernt werden.

Die erfindungsgemäßen Beschichtungsmassen besitzen nach dem Aushärten eine hohe Haftzugfestigkeit auf trockenem und feuchtem Beton, Estrich und Gussasphalt, die vorzugsweise mindestens 1,5 N/mm² beträgt.

Die Haftzugfestigkeit wird dabei nach DIN EN 13813 ermittelt, indem unter definierten Bedingungen (Messfläche, Temperatur, Abzugsgeschwindigkeit u.a.) ein auf der Beschichtung des betreffenden Prüfkörpers aufgeklebter Stempel (so genannter Prüfstempel) mittels einer Zugprüfmaschine senkrecht zur Substratoberfläche gleichmäßig langsam bis zum Abriss (Bruch) abgezogen wird.

Die erfindungsgemäßen Beschichtungen zeigen zudem eine hohe Pendelhärte, eine gute Kratzfestigkeit sowie eine gute Abriebfestigkeit und eine gute Chemikalienbeständigkeit.

Die erfindungsgemäßen Beschichtungsmassen haben den Vorteil, dass sie einfach herzustellen sind.

Die erfindungsgemäßen vernetzbaren Beschichtungsmassen haben den Vorteil, dass sie sich durch eine sehr hohe Lagerstabilität und eine hohe Vernetzungsgeschwindigkeit auszeichnen.

Des Weiteren haben die erfindungsgemäßen vernetzbaren Beschichtungsmassen den Vorteil, dass sie leicht zu verarbeiten sind.

Bei den erfindungsgemäßen Beschichtungen handelt es sich bevorzugt um Bodenbeschichtungen. Besonders bevorzugt handelt es sich um Bodenbeschichtungen, die auf einen aus Beton, Zement oder Estrich bestehenden Untergrund aufgebracht werden.

Bei einer weiteren bevorzugten Ausführungsform der Erfindung werden die erfindungsgemäßen Beschichtungsmassen als Parkettlacke eingesetzt. Hier weisen die erfindungsgemäßen Beschichtungen den zusätzlichen Vorteil einer guten "Anfeuerung" des Holzes auf. D.h., die erfindungsgemäßen Beschichtungen wirken farbvertiefend und verstärken zudem auch die natürliche Maserung des Holzes.

Bei einer weiteren bevorzugten Ausführungsform der Erfindung werden die vernetzbaren Massen als Beschichtungen für dekorative natürliche oder künstliche Steinoberflächen eingesetzt. Auch hier zeigen die erfindungsgemäßen Beschichtungen eine ausgeprägte Farbvertiefung.

Bei dem erfindungsgemäßen Verfahren kann das Aufbringen nach beliebigen und bisher bekannten Verfahren erfolgen, wie z.B. Gießen, Spachteln, Rollen, Sprühen und Streichen.

Die erfindungsgemäßen Beschichtungsmassen können dabei direkt auf den Untergrund aufgebracht werden. Vorzugsweise wird der Untergrund vor dem Auftrag der erfindungsgemäßen Beschichtungsmasse gereinigt, dabei sollten insbesondere lose Teile, Bewuchs von Flechten, Algen oder Pflanzen, Fett, Paraffin, Trennmittel sowie sonstige Verunreinigungen entfernt werden. Poren, Lunker oder Kiesnester sind vorzugsweise vor dem Aufbringen der Beschichtung zu verfüllen. Grundsätzlich gilt, dass es für eine gute Haftung von Vorteil ist, wenn die Oberfläche eine gewisse Rauigkeit und Griffigkeit aufweist.

In den nachstehend beschriebenen Beispielen beziehen sich alle Viskositätsangaben auf eine Temperatur von 23 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiele

In den nachstehenden Beispielen wurden folgende Stoffe eingesetzt:
**GENIOSIL® STP-E10:** Silanterminiertes Polypropylenglycol mit einer mittleren Molmasse (Mₙ) von 12 000 g/mol und Endgruppen der Formel -O-C(=O)-NH-CH₂-SiCH₃(OCH₃)₂ (käuflich erhältlich bei Wacker Chemie AG, D-München).
**GENIOSIL® GF 9:** N-(2-Aminoethyl)-3-aminopropyl-trimethoxysilan (käuflich erhältlich bei der Wacker Chemie AG, D-München).
**GENIOSIL® GF 80:** 3-Glycidoxypropyl-trimethoxysilan (käuflich erhältlich bei der Wacker Chemie AG, D-München).
**DBU:** 1,8-diazabicyclo-5.4.0-undec-7-en.
**Entlüfter SILFOAM® SC 124:** Wasserfreies, niedrigviskoses, flüssiges Entschäumercompound auf Basis von Polydimethylsiloxan mit einer dynamischen Viskosität kleiner 4000 mPas (Brookfield Spindel 2; 2,5 U/min; bei 25 °C).
**Quarzmehl W8 (1-100 µm) :** Quarzmehl mit einer Körnung von 0,001-0,16 mm, einer mittleren Korngröße von 0,026 mm, einem Kornanteil > 10 µm von 76 Gew.-%, einem Kornanteil > 20 µm von 59 Gew.-%, einem Kornanteil > 30 µm von 44 Gew.-%, einem Kornanteil > 40 µm von 40 Gew.-% und einer Schüttdichte von 0,9 kg/l.
**Kronos® 2190:** Titandioxid mit einem TiO₂-Gehalt >95%, einer Standardklassifizierung nach DIN EN ISO 591-1) von R2, dem Farbindex Pigment White 6, und einer Schüttdichte von 4,1 kg/l und einer Ölzahl von 18 g / 100 g (käuflich erhältlich bei der Fa. Kronos, USA Dallas).
**Kronos® 2310:** Titandioxid mit einem TiO₂-Gehalt >92,5%, einer Standardklassifizierung nach DIN EN ISO 591-1) von R2, dem Farbindex Pigment White 6, und einer Schüttdichte von 4,0 kg/l und einer Ölzahl von 17 g / 100 g (käuflich erhältlich bei der Fa. Kronos, USA Dallas).
**TINUVIN® B 75:** Mischung aus 20% Irganox® 1135 (CAS-Nr. 125643-61-0), 40% Tinuvin® 571 (CAS-NR. 23328-53-2) und 40% Tinuvin® 765 (CAS-NR. 41556-26-7)) (käuflich erhältliche bei der BASF SE, D-Ludwigshafen).
**Deuteron® M 648:** Mattierungsmittel mit einer Ölzahl von 206 g/100 g, einer Schüttdichte von 120 g/l und einer mittleren Teilchengröße d50 von 6 µm (käuflich erhältlich bei der Fa. Deuteron, D-Achim).
**Deuteron® Pergopak M3:** Mattierungsmittel mit einer Ölzahl von 333 g/100 g, einer Schüttdichte von 140 g/l und einer mittleren Teilchengröße d50 von 7 µm (käuflich erhältlich bei der Fa. Deuteron, D-Achim).
**Ruß Printex 300:** Ruß mit einem Blackness Value M von 242 (gemessen nach DIN 55979), einer BET-Oberfläche von ca. 80 m²/g, einer mittleren Partikelgröße von ca. 27 nm und einer Ölzahl von ca. 68 ml/100g (käuflich erhältlich bei der Fa. Orion, D-Frankfurt a. M.).

### Herstellung von Verbindung A

In einem 2 1-Vierhalskolben mit Tropftrichter, Liebigkühler, KPG-Rührer und Thermometer werden 1080 g eines Polypropylenglycols mit einer zahlenmittleren Molekülmasse von 4000 g/mol (Acclaim PPG 4200, käuflich erhältlich bei der Fa. Covestro AG, D-Leverkusen, vorgelegt, auf 80 °C erwärmt und für 2 h bei einem Druck von 10 mbar, getrocknet.

Das Vakuum wird mit Stickstoff gebrochen, und es werden innerhalb von 15 min 91,2 g α-Isocyanatomethyl-methyldimethoxysilan (GENIOSIL® XL 42, käuflich erhältlich bei der Wacker Chemie AG, D-München) unter Rühren zugetropft. Die Temperatur bleibt dabei bei 80 °C. Danach werden 0,17 g bismut- und zinkhaltiger Katalysator (käuflich erhältlich unter der Bezeichnung "Borchi-Kat VP 244" der Fa. Borchers, D-Langenfeld) zugegeben. Dabei kommt es zu einer geringfügigen Erwärmung der Reaktionsmischung (< 5 °C). Anschließend wird für 2 h bei 80 °C gerührt. Im IR-Spektrum der Reaktionsmasse ist danach noch ein kleiner Isocyanat-Peak vorhanden.

Man lässt auf 50 °C abkühlen und gibt bei dieser Temperatur 1,6 g Methanol zu, um das restliche Isocyanat zu vernichten. Ein danach aufgenommenes IR-Spektrum bestätigt die NCO-Freiheit.

### Herstellung des Phenylsiliconharzes B

In einem 2 1-Vierhalskolben mit Tropftrichter, Liebigkühler, KPG-Rührer und Thermometer werden 1000 g Phenyltrimethoxysilan bei Raumtemperatur vorgelegt und unter Rührung mit 20 g einer 20%-igen wässrigen Salzsäure versetzt. Anschließend wird auf eine Temperatur von 65-68 °C erwärmt, bis ein schwacher Rückfluss einsetzt. Dann wird unter Rückfluss eine Mischung aus 74 g Wasser und 40 g Methanol gleichmäßig innerhalb von 30 min zugegeben. Nach Ende der Zugabe wird für weitere 10 min unter Rückfluss gerührt und danach auf Raumtemperatur abgekühlt.

Die Reaktionsmischung wird für ca. 16 h bei Raumtemperatur stehen gelassen, anschließend werden 60 g Natriumhydrogencarbonat unter Rührung zugeben, es wird für 30 min gerührt, dann wird der entstandene Feststoff durch Filtration abgetrennt. Zuletzt werden die Leichtsieder (im Wesentlichen Methanol) destillativ entfernt. Dabei werden zunächst ca. 80-90% der abzunehmenden Destillatmenge bei 1013 mbar und einer Temperatur von 120 °C entfernt, anschließend wird der Druck auf 10 mbar reduziert, und während der folgenden 15-20 min werden die verbleibenden leichtsiedenden Reste abdestilliert.

Es wird ein Phenylsiliconharz B mit einer mittleren Molmasse Mn von 1200 g/mol, einer Viskosität von 90 mPas bei 23 °C und einem Gehalt an Methoxygruppen von 18% bezogen auf die gesamte Harzmasse erhalten.

### Beispiele 1 bis 7 (B1-B7) und Vergleichsbeispiel 1 (VB 1): Herstellung von 1K-Beschichtungsmassen

Alle Verbindungen werden entsprechend der in Tabelle 1 angegebenen Gewichtsverhältnissen eingesetzt.

Die Beschichtungsmassen werden hergestellt, indem zunächst das Phenylsiliconharz B, dessen Herstellung oben beschrieben ist, in einem Becher mit einem Durchmesser von 6,5 cm vorgelegt wird. Danach werden die weiteren Komponenten in der in Tabelle 1 angegebenen Reihenfolge von oben nach unten zugegeben, wobei jede Komponenten jeweils mit einem Dissolver mit einer Dispergierscheibe V2A 40mm der Fa. Pendraulik (D-Springe) und einer Umdrehungszahl von 1000 UpM eingeführt wird. Zum Schluss wird mit derselben Dissolverscheibe noch einmal für 2 min bei einer Umdrehungszahl von 2000 UpM dispergiert.

Die gebrauchsfertigen Mischungen werden jeweils in luftdicht verschließbare Gefäße gefüllt. In diesen können sie unter Ausschluss von Luftfeuchtigkeit für mindestens 6 Monate aufbewahrt werden. Unmittelbar vor der Verwendung wird die Mischung, sofern sie Füllstoffe enthält, d.h. die Mischungen aus den Beispielen 6 und 7, mit einem Spatel aufgerührt, bis die Mischung erneut homogen ist.

**Tabelle 1:**

| | B1 | VB2 | B2 | B3 | B4 | B5 | B6 | B7 |
|---|---|---|---|---|---|---|---|---|
| Phenylsiliconharz B | 85,8 | 85,8 | 80,3 | 80,3 | 78,0 | 78,0 | 34,0 | 33,9 |
| Verbindung A | 10,0 | | 9,1 | 9,1 | 8,3 | 8,3 | 4,0 | 4,0 |
| GENIOSIL® STP-E10 | | 10,0 | | | | | | |
| GENIOSIL® GF 9 | 3,0 | 3,0 | 2,9 | 2,9 | 2,7 | 2,7 | 2,0 | 2,0 |
| DBU | 0,2 | 0,2 | 0,2 | 0,2 | | | | |
| GENIOSIL® GF 80 | | | 1 | 1 | | | | |
| SILFOAM® SC 124 | | | 0,5 | 0,5 | | | | |
| Quarzmehl W8 | | | | | | | 56 | 56 |
| Kronos® 2190 | | | | | | | 3 | |
| Kronos® 2310 | | | | | | | | 3 |
| TINUVIN® B 75 | 1 | 1 | 1 | 1 | 1 | 1 | 1 | 1 |
| Deuteron® M 648 | | | 5 | | 10 | | | |
| Deuteron® Pergopak M3 | | | | 5 | | 10 | | |
| Ruß Printex 300 | | | | | | | | 0,1 |

Alle Zahlenwerte in Tabelle 1 stellen Angaben in Gramm [g] dar.

### Beispiel 8: Bestimmung von Eigenschaften der Beschichtungen aus den Beispielen 1 bis 7 und dem Vergleichsbeispiel 1

Bei der Applikation werden die Beschichtungen jeweils mit einem Pinsel auf eine Betonplatte aufgetragen. Die aufgetragene Menge beträgt dabei ca. 180 g/m² bei den Beispielen 1-5 sowie dem Vergleichsbeispiel 1 bzw. 250 g/m² bei den Beispielen 6 und 7. Nach einer Lagerung von 24 h bei Normklima (23 °C / 50% Luftfeuchtigkeit) wird ebenfalls mit dem Pinsel eine zweite Schicht aufgetragen, wobei erneut dieselbe Materialmenge zum Einsatz kommt.

### Hautbildungszeit

Zur Bestimmung der Hautbildungszeit wird während des Aushärtens bei Normklima alle 5 min ein trockener Laborspatel vorsichtig auf der Oberfläche der aufgepinselten Beschichtung aufgesetzt und nach oben gezogen. Bleibt dabei noch Material am Spatel kleben, hat sich noch keine Haut gebildet. Bleibt keine Probe am Spatel mehr kleben, so hat sich eine Haut gebildet und die Zeit wird notiert.

In Tabelle 2 ist dabei der Mittelwert der Hautbildungszeiten aus dem ersten und dem zweiten Auftrag der Beschichtung angegeben.

### Erichsen-Härte

Für die Härteprüfung wird die zweischichtige Beschichtung für 7 Tage bei Normklima gelagert. Die Härteprüfung selbst wird mit einem Erichsen Kratzstift (Hardness Test Pencil Model 318S) durchgeführt, wobei mit der Mine des Stiftes mit einer zuvor entsprechend eingestellten Andruckkraft über die ausgehärtete Beschichtung gekratzt wird. Die in Tabelle 2 angegebene Erichsen Härte stellt dabei diejenige maximale Andruckkraft dar, bei der der Erichsen Kraftstift gerade noch keinen visuell erkennbaren Kratzer hinterlässt.

Für die Prüfung der Verschmutzungsneigung wird die zweischichtige Beschichtung für 7 Tage bei Normklima gelagert. Anschließend werden die in Tabelle 2 angegebenen Verschmutzungen auf die Oberfläche der Beschichtung appliziert und für 24 h dort belassen, wobei die Proben unter Normklima gelagert werden. Die anschließende Reinigung erfolgte unter fließendem Wasser, wobei bei eingetrockneten Verschmutzungen wie Senf oder Ketchup mit einem herkömmlichen Haushaltsschwamm nachgereinigt wurde. Nach dem Trocknen erfolgte die Verschmutzungsbeurteilung nach EN 12720. Eine Bewertung von 5 bedeutet dabei, dass keinerlei Verschmutzungen erkennbar waren, eine Bewertung von 4 steht für eine gerade noch erkennbare Verschmutzung, die mit abnehmender Zahlengröße immer deutlicher wird, bis zu einer Bewertung von 1, die für eine sehr starke Verschmutzung der Oberfläche steht.

**Tabelle 2:**

| | B1 | VB1 | B2 | B3 | B4 | B5 | B6 | B7 |
|---|---|---|---|---|---|---|---|---|
| Hautbildungszeit [min] | 35 | 45 | 35 | 40 | 120 | 125 | 70 | 70 |
| Erichsen-Härte [N] | 3 | 1 | 3 | 3 | 3 | 3 | 5 | 5 |
| | | | | | | | | |
| **Aussehen** | transparent, glänzend | | transparent, leicht seidenmatt | | transparent, seidenmatt | | weiß | grau |
| Glanz (20°) | 36% | 54% | 19,5% | 18,7% | 13,3% | 15,4% | | |
| | | | | | | | | |

| **Verschmutzungsneigung:** | | | | | | | | |
|---|---|---|---|---|---|---|---|---|
| Wasser | 5 | 5 | 5 | 5 | 5 | 5 | 5 | 5 |
| Salzwasser (20% NaCl) | 5 | 5 | 5 | 5 | 5 | 5 | 5 | 5 |
| Balsamico-Essig | 4 | 2 | 4 | 4 | 4 | 4 | 2 | 3 |
| Rotwein | 5 | 5 | 5 | 5 | 5 | 5 | 5 | 5 |
| Tinte | 5 | 5 | 5 | 5 | 5 | 5 | 5 | 5 |
| Butter | 5 | 5 | 5 | 5 | 5 | 5 | 5 | 5 |
| Olivenöl | 5 | 5 | 5 | 5 | 5 | 5 | 5 | 5 |
| Kaffee | 5 | 3 | 5 | 5 | 5 | 5 | 3 | 3 |
| Senf | 5 | 2 | 5 | 5 | 5 | 5 | 3 | 3 |
| Ketchup | 5 | 2 | 5 | 5 | 5 | 5 | 5 | 5 |
| Benzin | 5 | 2 | 3 | 3 | 3 | 3 | 5 | 5 |
| Diesel | 5 | 5 | 5 | 5 | 5 | 5 | 5 | 5 |
| Bodenreiner (pH 10) | 4 | 3 | 5 | 5 | 5 | 5 | 5 | 5 |
| Zementschleier-Entferner | 5 | 2 | 5 | 5 | 5 | 5 | 5 | 5 |
| Cola | 5 | 5 | 5 | 5 | 5 | 5 | 5 | 5 |
| Schwefelsäure (20 %-ig) | 5 | 3 | 5 | 2 | 5 | 2 | 5 | 5 |
| Natronlauge (20 %-ig) | 2 | 1 | 1 | 1 | 1 | 1 | 1 | 1 |
| Milchsäure (90 %-ig) | 4 | 3 | 5 | 5 | 5 | 5 | 4 | 4 |
| Altöl | 5 | 5 | 5 | 5 | 5 | 5 | 5 | 5 |
| Ethanol | 5 | 5 | 5 | 5 | 5 | 5 | 5 | 5 |
| **Summe** | 94 | 73 | 93 | 90 | 93 | 90 | 88 | 89 |

## Patentansprüche

1. Vernetzbare Beschichtungsmassen (M) enthaltend
(A) 100 Gewichtsteile Verbindungen der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest bedeutet, dessen zahlenmittlere Molekülmasse 200 bis 10 000 g/Mol beträgt, wobei die zahlenmittlere Molekülmasse durch SEC, wie in der Beschreibung erklärt, ermittelt wird, und der keine aromatischen Strukturelemente mit direkt an den Aromaten gebundene Stickstoff- oder Sauerstoffatomen enthält,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist, und
(B) mindestens 100 Gewichtsteile Siliconharze enthaltend Einheiten der Formel
R³_{c}(R⁴O)_{d}R⁵ₑSiO_{(4-c-d-e)/2} (II),
wobei
R³ gleich oder verschieden sein kann und Wasserstoffatom, einen einwertigen, SiC-gebundenen, gegebenenfalls substituierten, aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten, aromatischen Kohlenwasserstoffrest bedeutet,
c 0, 1, 2 oder 3 ist,
d 0, 1, 2 oder 3 ist und
e 0, 1 oder 2 ist,
mit der Maßgabe, dass die Summe aus c+d+e kleiner oder gleich 3 ist und in mindestens 40 % der Einheiten der Formel (II) die Summe c+e gleich 0 oder 1 ist,
wobei
die Massen (M) weniger als 100 Gewichtsteile Verbindungen (C1) der Formel
Y¹-[(CR¹₂)_{b}-SiRₐ(OR²)₃₋ₐ]ₓ (I')
enthalten, wobei
Y¹ einen x-wertigen, über Stickstoff, Sauerstoff, Schwefel oder Kohlenstoff gebundenen Polymerrest bedeutet, dessen zahlenmittlere Molekülmasse Mn mehr als 10 000 g/Mol beträgt, wobei die zahlenmittlere Molekülmasse durch SEC, wie in der Beschreibung erklärt, ermittelt wird, und
R, R¹, R², a, b sowie x jeweils gleich oder verschieden sein können und eine der in Anspruch 1 genannten Bedeutungen aufweisen.

2. Beschichtungen gemäß Anspruch 1, **dadurch gekennzeichnet, dass** es sich bei Rest Y in Formel (I) um Polyoxypropylenreste, deren zahlenmittlere Molekülmasse 200 bis 10 000 g/Mol beträgt, handelt.

3. Vernetzbare Massen gemäß Anspruch 1 oder 2, **dadurch gekennzeichnet, dass** es sich bei Rest Y in Formel (I) um Polyoxypropylenreste, deren zahlenmittlere Molekülmasse 500 bis 8 000 g/Mol beträgt, handelt.

4. Vernetzbare Massen gemäß einem oder mehreren der Ansprüche 1 bis 3, **dadurch gekennzeichnet, dass** sie bezogen auf 100 Gewichtsteile der Komponente (A) mindestens 200 Gewichtsteile Komponente (B) enthalten.

5. Vernetzbare Massen gemäß einem oder mehreren der Ansprüche 1 bis 4, **dadurch gekennzeichnet, dass** die erfindungsgemäßen Massen (M) weniger als 100 Gewichtsteile Verbindungen (C2) der Formel
Y²-[(CR¹₂)_{b}-SiRₐ(OR²)₃₋ₐ]ₓ (I")
enthalten, wobei
Y² einen x-wertigen, über Stickstoff, Sauerstoff, Schwefel oder Kohlenstoff gebundenen Polymerrest bedeutet, der aromatische Strukturelemente mit direkt an den Aromaten gebundene Stickstoff- oder Sauerstoffatome enthält, und
R, R¹, R², a, b sowie x jeweils gleich oder verschieden sein können und eine der in Anspruch 1 genannten Bedeutungen aufweisen.

6. Vernetzbare Massen gemäß einem oder mehreren der Ansprüche 1 bis 5, **dadurch gekennzeichnet, dass** es sich um solche handelt enthaltend
(A) 100 Gewichtsteile Verbindungen der Formel (I) und
(B) mindestens 100 Gewichtsteile Siliconharze enthaltend Einheiten der Formel (II) sowie mindestens eine weitere Komponente ausgewählt aus
(D) Stickstoff aufweisende Organosiliciumverbindung,
(E) Katalysatoren,
(F) Haftvermittler,
(G) Wasserfänger,
(H) Füllstoffe,
(I) Additive und
(J) Zuschlagstoffe.

7. Vernetzbare Massen gemäß einem oder mehreren der Ansprüche 1 bis 6, **dadurch gekennzeichnet, dass** die erfindungsgemäßen Massen (M) weniger als 10 Gewichtsteile organische Lösungsmittel bezogen auf 100 Gewichtsteile der erfindungsgemäßen Masse (M) enthalten.

8. Verfahren zur Herstellung der vernetzbaren Massen gemäß einem oder mehreren der Ansprüche 1 bis 7 durch Mischen der einzelnen Komponenten in beliebiger Reihenfolge.

9. Formkörper, hergestellt durch Vernetzung der Massen gemäß einem oder mehreren der Ansprüche 1 bis 7 oder hergestellt nach Anspruch 8.

10. Verfahren zur Herstellung von Beschichtungen, bei dem die Beschichtungsmasse gemäß einem oder mehreren der Ansprüche 1 bis 7 oder hergestellt nach Anspruch 8 auf mindestens ein Substrat aufgebracht und anschließend vernetzen gelassen wird.

## Claims

1. Crosslinkable coating compositions (M) containing
(A) 100 parts by weight of compounds of formula
Y-[(CR¹₂)_{b}-SiRₐ(OR²)₃₋ₐ]ₓ (I),
wherein
Y represents an x-valent polymer radical bonded via nitrogen, oxygen, sulfur or carbon which has a number-average molecular mass of 200 to 10 000 g/mol, wherein the number-average molecular mass is determined by SEC, as explained in the description, and which contains no aromatic structural elements having nitrogen or oxygen atoms bonded directly to the aromatics,
R may be identical or different and represents a monovalent, optionally substituted SiC-bonded hydrocarbon radical,
R¹ may be identical or different and represents hydrogen or a monovalent, optionally substituted hydrocarbon radical that may be attached to the carbon atom via nitrogen, phosphorus, oxygen, sulfur or a carbonyl group,
R² may be identical or different and represents hydrogen or a monovalent, optionally substituted hydrocarbon radical,
x is an integer from 1 to 10,
a may be identical or different and is 0, 1 or 2 and
b may be identical or different and is an integer from 1 to 10 and
(B) at least 100 parts by weight of silicone resins containing units of formula
R³_{c}(R⁴O)_{d}R⁵ₑSiO_{(4-c-d-e)/2} (II),
wherein
R³ may be identical or different and represents hydrogen, a monovalent, SiC-bonded, optionally substituted aliphatic hydrocarbon radical or a divalent, optionally substituted aliphatic hydrocarbon radical that bridges two units of formula (II),
R⁴ may be identical or different and represents hydrogen or a monovalent, optionally substituted hydrocarbon radical,
R⁵ may be identical or different and represents a monovalent, SiC-bonded, optionally substituted aromatic hydrocarbon radical,
c is 0, 1, 2 or 3,
d is 0, 1, 2 or 3 and
e is 0, 1 or 2,
with the proviso that the sum of c+d+e is less than or equal to 3 and in at least 40% of the units of formula (II) the sum of c+e is 0 or 1,
wherein
the compositions (M) contain less than 100 parts by weight of compounds (C1) of formula
Y¹-[(CR¹₂)_{b}-SiRₐ(OR²)₃₋ₐ]ₓ (I'),
wherein
Y¹ is an x-valent polymer radical bonded via nitrogen, oxygen, sulfur or carbon which has a number-average molecular mass Mₙ of more than 10 000 g/mol, wherein the number-average molecular mass is determined by SEC, as explained in the description, and R, R¹, R², a, b and x in each case may be identical or different and have one of the definitions recited in Claim 1.

2. Coatings according to Claim 1, **characterized in that** radical Y in formula (I) represents polyoxypropylene radicals having a number-average molecular mass of 200 to 10 000 g/mol.

3. Crosslinkable compositions according to Claim 1 or 2, **characterized in that** radical Y in formula (I) represents polyoxypropylene radicals having a number-average molecular mass of 500 to 8000 g/mol.

4. Crosslinkable compositions according to one or more of Claims 1 to 3, **characterized in that** based on 100 parts by weight of the component (A) they contain at least 200 parts by weight of component (B).

5. Crosslinkable compositions according to one or more of Claims 1 to 4, **characterized in that** the compositions (M) according to the invention contain less than 100 parts by weight of compounds (C2) of formula
Y²-[(CR¹₂)_{b}-SiRₐ(OR²)₃₋ₐ]ₓ (I"),
wherein
Y² is an x-valent polymer radical bonded via nitrogen, oxygen, sulfur or carbon which contains aromatic structural elements comprising nitrogen or oxygen atoms bonded directly to the aromatics and R, R¹, R², a, b and x in each case may be identical or different and have one of the definitions recited in Claim 1.

6. Crosslinkable compositions according to one or more of Claims 1 to 5, **characterized in that** said compositions contain
(A) 100 parts by weight of compounds of formula (I) and
(B) at least 100 parts by weight of silicone resins containing units of formula (II) and at least one further component selected from
(D) nitrogen-containing organosilicon compound,
(E) catalysts,
(F) adhesion promoters,
(G) water scavengers,
(H) fillers,
(I) additives and
(J) admixture agents.

7. Crosslinkable compositions according to one or more of Claims 1 to 6, **characterized in that** the compositions (M) according to the invention contain less than 10 parts by weight of organic solvents based on 100 parts by weight of the composition (M) according to the invention.

8. Process for producing the crosslinkable compositions according to one or more of Claims 1 to 7 by mixing the individual components in any desired sequence.

9. Shaped article produced by crosslinking the compositions according to one or more of Claims 1 to 7 or produced according to Claim 8.

10. Process for producing coatings in which the coating composition according to one or more of Claims 1 to 7 or produced according to Claim 8 is applied to at least one substrate and subsequently allowed to undergo crosslinking.

## Revendications

1. Matériaux de revêtement réticulables (M) contenant :
(A) 100 parties en poids de composés de la formule :
Y-[(CR¹₂)_{b}-SiRₐ(OR²)₃₋ₐ]ₓ (I)
dans laquelle
Y signifie un radical polymère x-valent, relié par un azote, un oxygène, un soufre ou un carbone, dont la masse moléculaire moyenne en nombre est de 200 à 10 000 g/mol, la masse moléculaire moyenne en nombre étant déterminée par SEC, tel qu'expliqué dans la description, et qui ne contient pas d'éléments structuraux aromatiques contenant des atomes d'azote ou d'oxygène reliés directement aux éléments aromatiques, les R peuvent être identiques ou différents, et représentent un radical hydrocarboné monovalent, éventuellement substitué, relié à SiC,
les R¹ peuvent être identiques ou différents, et représentent un atome d'hydrogène ou un radical hydrocarboné monovalent, éventuellement substitué, qui peut être relié à l'atome de carbone par un azote, un phosphore, un oxygène, un soufre ou un groupe carbonyle,
les R² peuvent être identiques ou différents, et représentent un atome d'hydrogène ou un radical hydrocarboné monovalent, éventuellement substitué,
x représente un nombre entier de 1 à 10,
les a peuvent être identiques ou différents, et représentent 0, 1 ou 2, et
les b peuvent être identiques ou différents, et représentent un nombre entier de 1 à 10, et
(B) au moins 100 parties en poids de résines de silicone contenant des unités de la formule :
R³_{c}(R⁴O)_{d}R⁵ₑSiO_{(4-c-d-e)/2} (II)
dans laquelle
les R³ peuvent être identiques ou différents, et signifient un atome d'hydrogène, un radical hydrocarboné aliphatique monovalent, relié à SiC, éventuellement substitué, ou un radical hydrocarboné aliphatique bivalent, éventuellement substitué, qui ponte deux unités de la formule (II),
les R⁴ peuvent être identiques ou différents, et signifient un atome d'hydrogène ou un radical hydrocarboné monovalent, éventuellement substitué,
les R⁵ peuvent être identiques ou différents, et signifient un radical hydrocarboné aromatique monovalent, relié à SiC, éventuellement substitué,
c signifie 0, 1, 2 ou 3,
d signifie 0, 1, 2 ou 3, et
e signifie 0, 1 ou 2,
à condition que la somme de c+d+e soit inférieure ou égale à 3 et que dans au moins 40 % des unités de la formule (II), la somme c+e soit égale à 0 ou 1,
les matériaux (M) contenant moins de 100 parties en poids de composés (C1) de la formule :
Y¹-[(CR¹₂)_{b}-SiRₐ(OR²)₃₋ₐ]ₓ (I')
dans laquelle
Y¹ signifie un radical polymère x-valent, relié par un azote, un oxygène, un soufre ou un carbone, dont la masse moléculaire moyenne en nombre Mn est de plus de 10 000 g/mol, la masse moléculaire moyenne en nombre étant déterminée par SEC, tel qu'expliqué dans la description, et
R, R¹, R², a, b et x peuvent chacun être identiques ou différents, et présentent une des significations indiquées dans la revendication 1.

2. Revêtements selon la revendication 1, **caractérisés en ce que** le radical Y dans la formule (I) consiste en des radicaux polyoxypropylène, dont la masse moléculaire moyenne en nombre est de 200 à 10 000 g/mol.

3. Matériaux réticulables selon la revendication 1 ou 2, **caractérisés en ce que** le radical Y dans la formule (I) consiste en des radicaux polyoxypropylène dont la masse moléculaire moyenne en nombre est de 500 à 8 000 g/mol.

4. Matériaux réticulables selon une ou plusieurs revendications 1 à 3, **caractérisés en ce qu'**ils contiennent au moins 200 parties en poids du composant (B), par rapport à 100 parties en poids du composant (A) .

5. Matériaux réticulables selon une ou plusieurs revendications 1 à 4, **caractérisés en ce que** les matériaux (M) selon l'invention contiennent moins de 100 parties en poids de composés (C2) de la formule :
Y²-[(CR¹₂)_{b}-SiRₐ(OR²)₃₋ₐ]ₓ (I")
dans laquelle
Y² signifie un radical polymère x-valent, relié par un azote, un oxygène, un soufre ou un carbone, qui contient des éléments structuraux aromatiques contenant des atomes d'azote ou d'oxygène directement reliés aux éléments aromatiques, et
R, R¹, R², a, b et x peuvent chacun être identiques ou différents, et présentent une des significations indiquées dans la revendication 1.

6. Matériaux réticulables selon une ou plusieurs revendications 1 à 5, **caractérisés en ce qu'**il s'agit de matériaux contenant :
(A) 100 parties en poids de composés de la formule (I) et
(B) au moins 100 parties en poids de résines de silicone contenant des unités de la formule (II), ainsi qu'au moins un composant supplémentaire choisi parmi :
(D) un composé d'organosilicium comprenant de l'azote,
(E) des catalyseurs,
(F) des promoteurs d'adhésion,
(G) des capteurs d'eau,
(H) des charges,
(I) des additifs, et
(J) des ajouts.

7. Matériaux réticulables selon une ou plusieurs revendications 1 à 6, **caractérisés en ce que** les matériaux (M) selon l'invention contiennent moins de 10 parties en poids de solvants organiques, par rapport à 100 parties en poids du matériau (M) selon l'invention.

8. Procédé de fabrication des matériaux réticulables selon une ou plusieurs des revendications 1 à 7 par mélange des composants individuels dans un ordre quelconque.

9. Corps moulé, fabriqué par réticulation des matériaux selon une ou plusieurs des revendications 1 à 7 ou fabriqués selon la revendication 8.

10. Procédé de fabrication de revêtements, selon lequel le matériau de revêtement selon une ou plusieurs des revendications 1 à 7 ou fabriqué selon la revendication 8 est appliqué sur au moins un substrat, puis laissé réticulé.
